# EUROPÄISCHE PATENTSCHRIFT

(11) **EP 4 225 645 B1**
(45) Veröffentlichungstag und Bekanntmachung des Hinweises auf die Patenterteilung: **30.04.2025**
(21) Anmeldenummer: 21786762.1
(22) Anmeldetag: 23.09.2021
(51) Int. Cl.: B64D 27/24, B64D 27/02, B64D 37/00

(54) **FLUGZEUG MIT EINEM ANTRIEBS- UND ENERGIESYSTEM FÜR EMISSIONSARMEN REISEFLUG**
AIRCRAFT HAVING A DRIVE-AND-ENERGY SYSTEM FOR LOW-EMISSION CRUISING FLIGHT
AÉRONEF COMPRENANT UN SYSTÈME D'ENTRAÎNEMENT ET D'ÉNERGIE POUR UN VOL DE CROISIÈRE À FAIBLES ÉMISSIONS

(30) Priorität: 05.10.2020 DE 102020126045
(43) Veröffentlichungstag der Anmeldung: 16.08.2023
(73) Patentinhaber: Deutsche Aircraft GmbH, 82234 Weßling (DE)
(72) Erfinder: RIEDIGER, Carsten, 82211 Herrsching (DE); NÜSSELER, Martin, 86869 Oberostendorf (DE)
(74) Vertreter: Sawodny, Michael-Wolfgang
(86) Internationale Anmeldenummer: PCT/DE2021/100772
(87) Internationale Veröffentlichungsnummer: WO 2022/073543

(56) Entgegenhaltungen:
- EP-A1- 3 556 658
- EP-A1- 3 556 659
- WO-A1-2018/175349
- DE-A1- 102014 224 637
- US-A1- 2019 382 121
- US-A1- 2020 277 069

## Beschreibung

Die Erfindung betrifft ein mehrmotoriges Flugzeug sowie ein Verfahren zum Betrieb eines mehrmotorigen Flugzeugs.

Unter einem Flugzeug ist insbesondere ein motorbetriebenes Starrflügelflugzeug zu verstehen. Unter den Begriff Flugzeug fallen aber z.B. auch Drehflügler (Rotorflugzeug, Hubschrauber) und Motorsegler. Flugzeuge und deren Flugantriebe lassen sich hinsichtlich der geltenden Bau- und Zulassungsvorschriften unterscheiden. Die von der EASA herausgegebene Vorschrift CS-23 sind für leichte, starrflügelige Motorflugzeuge anzuwendenden. Sie betrifft: Flugzeuge in den Kategorien ,normal, utility oder aerobatic' mit maximal 9 Sitzplätzen (ohne Pilot(en) und einer maximalen Startmasse von 5.670 kg sowie für Flugzeuge der Kategorie ,commuter' mit maximal 19 Sitzplätzen (ohne Pilot(en)) und einer maximalen Startmasse von 8.618 kg. Die CS-25 ist ebenfalls eine von der EASA herausgegebene Bauvorschrift über die Bauartzulassung für Großflugzeuge, insbesondere für große, turbinengetriebene Flugzeuge. Vorliegend werden mehrmotorige, nach der Bauvorschrift CS-25 zu zertifizierende Flugzeuge betrachtet.

Regionalverkehrsflugzeuge sind überwiegend durch eine Bauweise mit geraden, ungepfeilten Tragflächen und einer Reisegeschwindigkeit von 500 bis 700 km/h charakterisiert. Heutzutage ist der Turbopropantrieb Haupteinsatzbereich für Regionalverkehrsflugzeuge in der Zivilluftfahrt. Ein prominenter Vertreter dieser Flugzeugkategorie ist die Dornier 328-100 (Dornier 328 TP. 2020. Verfügbar: https://328.eu/wp-content/uploads/2020/09/D328-100.pdf [Aufgerufen 28.09.2020]).

Turboprop (Kunstwort aus Turbojet und Propeller) ist eine landläufige Bezeichnung für Propellerturbinenluftstrahltriebwerk (abgekürzt PTL), oft auch vereinfacht als Propellerturbine bezeichnet. Ein Turboprop ist eine Wärmekraftmaschine mit kontinuierlicher innerer Verbrennung (thermische Strömungsmaschine) und wird hauptsächlich als Luftfahrtantrieb verwendet. Umgangssprachlich wird häufig auch ein durch PTL angetriebenes Flugzeug als "Turboprop" bezeichnet.

Diese Art des Triebwerks zeichnet sich durch einen relativ niedrigen spezifischen Kraftstoffverbrauch aus, weswegen es vornehmlich bei Transport- und Kurzstreckenflugzeugen eingesetzt wird. Ein weiterer ziviler Einsatzbereich sind kleinere Geschäftsreiseflugzeuge wie z.B. TBM-850. Militärisch werden Turboprops vorwiegend in taktischen Transportflugzeugen verwendet. Flugzeuge mit Turboprops sind auf Fluggeschwindigkeiten bis zu 80 Prozent der Schallgeschwindigkeit (0,8 Mach) beschränkt, was in 8.000 m Höhe bei Normalbedingungen etwa 870 km/h entspricht. In diesem Geschwindigkeitsbereich arbeiten Turboprops wirtschaftlicher als reine Turbinentriebwerke.

Das Turboprop-Triebwerk besteht aus einer Gasturbine, die in der Regel über ein drehzahlverminderndes Getriebe einen Propeller antreibt, Der Schub des Triebwerks wird dabei größtenteils vom Propeller erzeugt - das den Auslass-Diffusor verlassende Arbeitsgas trägt mit lediglich max. 10 % zum Gesamtschub bei, womit sich das Vortriebsprinzip deutlich von Turbojet-Triebwerken unterscheidet und eher dem Turbofan ähnelt. Zur Schuberzeugung wird vom Propeller eine große Luftmenge bewegt, diese dabei jedoch im Vergleich zu Turbojet-Triebwerken nur schwach beschleunigt. Bei reinen Turbojet-Strahltriebwerken werden dagegen wesentlich kleinere Mengen des Antriebsmediums sehr viel stärker beschleunigt.

Je nach Fluggeschwindigkeit, Flughöhe und Last wird der Anstellwinkel der Propellerblätter verändert, so dass sowohl die Turbine als auch die Luftschraube möglichst gleichbleibend im optimalen Drehzahlbereich arbeiten.

Die Energie für den Antrieb der Luftschraube liefert die Gasturbine. Sie saugt Luft ein, die in einem axialen oder radialen, meist mehrstufigen Turbokompressor verdichtet wird. Anschließend gelangt sie in die Brennkammer, wo der Treibstoff mit ihr verbrennt. Das nun heiße energiereiche Verbrennungsgas durchströmt die meist axial und mehrstufig aufgebaute Turbine, wobei es sich ausdehnt und abkühlt. Die auf die Turbine übertragene Energie treibt über eine Welle einerseits den Turbokompressor und andererseits über ein Getriebe die Luftschraube an. Die Abgase werden nach hinten ausgestoßen.

Die Optimierung der Turbomaschinen erfolgt üblicherweise für die dominierende Flugphase, üblicherweise die Reiseflugphase da diese auch den höchsten Anteil am Energieverbrauch über die Mission aufweist. Eine gleichwertige, hohe Betriebseffizienz ist nicht über alle Flugphasen möglich. Während für Mittel- und Langstrecken die maximale Effizienz für den deutlich dominierenden Reiseflug ausgelegt und erreicht werden kann, sind die Betriebszustände für Kurz- und Ultrakurzstrecken wesentlich weniger dominant und unterschiedlicher. Dies hat zur Folge, dass Triebwerke für Regional- und Kurzstreckenflugzeuge über die Gesamtmission deutlich weniger bei optimaler Effizienz betrieben werden und relativ zu Kurz- und Langstrecken schlechteren spezifischen Kraftstoffverbrauch pro Passagier haben. Dabei spielt u.a. auch der unterschiedliche Abfall der propulsiven und thermischen Effizienz eine Rolle, da z.B. ein Propellerflugzeug niedriger fliegt und geringere, höhenabhängige Schubverluste im Reiseflug erfährt als vergleichsweise ein Langstreckenflugzeug mit Turbofan-Triebwerk. Dies führt dazu, dass Langstreckentriebwerke wesentlich konstanter bei hoher Leistung laufen und guter Effizienz betrieben werden, als im Steigflug, während Regionalflugzeuge sehr deutlich breitere Leistungsbereiche, z.B. bei Start, Steigflug und Reiseflug haben.

Daher ergeben sich im speziellen für Regionalflieger mit Propeller, aber auch für andere zweimotorige Flugzeuge mit Schaufelrad oder Rotor, sehr unterschiedliche Schubanforderungen über die Mission, die durch eine Hybridisierung der thermischen Maschinen mit einer elektrischen Maschine effizienter ausgelegt und betrieben werden kann.

Hinzu kommt die Herausforderung der Reduzierung von CO2-, NOX-, und Lärmemissionen. Dabei ist die Dekarbonisierung ist eine große Herausforderung für die Luftfahrt. Der Luftfahrtsektor emittiert mehr als 900 Millionen Tonnen Kohlendioxid (CO2) pro Jahr. Ausgehend von einem Branchenwachstum von 3 bis 4 Prozent pro Jahr (p.a.) und einer Effizienzverbesserung um 2 Prozent p.a. würden sich die Emissionen bis 2050 mehr als verdoppeln. Im gleichen Zeitraum verpflichtet sich die Luftfahrtbranche (Air Transport Action Group - ATAG) zu einer 50 Prozent CO2 Emissionsreduktion (im Vergleich zu 2005). Hinzu kommt, dass sich die Europäische Union (EU) mit dem Green Deal das Ziel gesetzt hat, kohlenstoffneutral zu werden. Abgesehen von CO2 beeinflussen Flugzeuge das Klima durch Emissionen von Stickoxiden (NOx), Ruß und Wasserdampf, die Kondensstreifen und Cirren. Daher ist der "volle" Beitrag zur globalen Erwärmung deutlich höher als nur CO2 Emissionen allein. (Hydrogen-powered aviation A factbased study of hydrogen technology, economics, and climate impact by 2050, May 2020. Verfügbar https://www.fch.europa.eu/ sites/default/files/FCH%20Docs/ 20200507 Hydrogen%20Powered%20Aviation%20report FINAL%20web%20%2 8ID%208706035%29.pdf [Aufgerufen: 24.09.2020]).

Die Frage, die sich derzeit stellt, ist, ob in der Zukunft elektrisch oder mit Wasserstoff betriebene Flugzeuge zum Einsatz kommen werden, um den zuvor gestellten Anforderungen zu begegnen? Möglicherweise. Airbus, Rolls Royce, GE und Siemens sind der Meinung, dass sie das Problem der Reduzierung von CO2, NOX, und Lärmemissionen durch den Ersatz von einem Turbofan-Triebwerk mit einem elektrischen Motor lösen können und folgen dabei der Automobilindustrie auf dem Weg elektrisch, oder zumindest hybrid, angetriebener Fahrzeuge ("Flightpath 2050 Europe's Vision for Aviation," [Online]. Verfügbar: https://ec.europa.eu/transport/sites/transport/files/modes/air/doc/flightpath2050. pdf . [Zugriff 14 03 2018]).

An einem entsprechenden hybridisierten Turbofan-Antrieb für zweistrahlige Verkehrsflugzeuge arbeitet GE International, wie die Offenbarung der EP 3 421 760 A1 zeigt. Dabei ist jeweils ein Elektromotor mit der Hochdruckwelle des einen und mit der Niederdruckwelle des anderen, zweiten Turbofan-Triebwerks gekoppelt. Zur Speisung der Elektromotoren ist ein elektrischer Energiespeicher vorgesehen, sodass die Elektromotoren in bestimmten Betriebszuständen zusätzliche Antriebsleistung an den gekoppelten Turbofan zur Verfügung stellen können. Ähnliche Lösungen schlagen SNECMA in der Veröffentlichung WO 2009/153471 A2 und UTC / PW in der US 2029/0282121 A1 vor. Ebenso arbeitet der Flugzeughersteller Boeing an einem ähnlichen hybriden Antriebskonzept, wie die beiden Veröffentlichungen EP 3 556 659 A1 und EP 3 556 658 A1 belegen. Ein weiteres Beispiel eines elektro-hybriden Antriebssystems für ein Flugzeug ist in der DE 10 2014 224637 Al beschrieben. Die WO 2018/175349 Al befasst sich mit der Optimierung des Flugprofils unte Berücksichtigung der verfügbaren Energieresourcen an Bord eines hybridelektrisch angetriebenen Flugzeuges.

Problematisch allerdings bleibt die Leistungs-Masse-Dichte der heute zur Verfügung stehenden Batterietechnologie um nennenswert in Konzepten wie zuvor beschrieben, elektrische Antriebsleistung zur Verfügung stellen zu können. Vereinfacht ausgedrückt, bietet die aktuelle Batterietechnologie keine ausreichend hohe Energiedichte; zudem ist das Leistungsgewicht-Verhältnis nicht hoch genug. Zum Beispiel,
Brennbare Brennstoffe wie Kerosin haben eine Energiedichte von etwa 40 MJ/kg, etwa 12.000 Wh/kg. Die Energiedichte der Lithium-Ionen-Batterien, die des ersten E-Fan, ist etwa 60 Mal weniger. Die spezifische Energie der Batterien beträgt damit etwa nur 2% die des flüssigen Brennstoffs. Zur Erinnerung: die167 kg Batterien des E-Fan mit 600 kg Masse reichte für etwa eine Flugstunde mit niedriger Geschwindigkeit fliegen. Im Vergleich dazu, das Leergewicht eines Bae146 beträgt etwa 24.000 kg. Die Zahlen scheinen darauf hinzudeuten, dass das Batteriegewicht für ein elektrisches Flugzeug 60 Mal so groß wie das Treibstoffgewicht für ein aktuelles Flugzeug für den gleichen Flug wäre. (,Batteries against Fossil
Fuel',https://batteryuniversity.com/learn/archive/batteries_against_fossil_fuel (Zugriff: 17.06.2020). Ein Beispiel für einen rein elektrischen Antrieb kommt von Bell, wie in der Veröffentlichung US 2020/277069 Al zu entnehmen.

Um die Auswirkungen auf das Klima zu reduzieren, untersucht die Industrie weitere Konzepte, wie zum Beispiel eine radikal neue Technologie, die nachhaltige Flugkraftstoffe (SAF) in signifikantem Umfang als synthetischer Kraftstoff (Synfuel) vorübergehend als Ausgleich in großen Mengen oder auf eine Kombination davon einsetzt. Der Wasserstoffantrieb ist eine solche Technologie.

In den 1980er Jahren wurden bei Tupolew alternative Kraftstoffe für Strahltriebwerke im Rahmen der Weiterentwicklungen der Tu-154 in der Praxis erprobt. Dabei entstand der mit Flüssigwasserstoff bzw. Erdgas betriebene Prototyp Tu-155. Bei dieser dreistrahligen Maschine wurde das rechte Triebwerk nicht von Kerosin, sondern von Wasserstoff oder Erdgas angetrieben. In jedem Fall lehrt die daraus gewonnene Erkenntnis, dass die Umstellung auf Wasserstoff für große Verkehrsflugzeuge eine Neukonstruktion mit großen, schweren LH2-Tanks erfordert. Zudem erhöht das höhere Gewicht bei Langstreckenflugzeugen den Energieverbrauch und damit die Kosten erheblich.

Hiervon ausgehend ist es Aufgabe der Erfindung, ein mehrmotoriges Flugzeug mit einem hybriden Antriebssystem anzugeben, mit welchem gleichwohl der Einsatz von Brennkraft- und insbesondere von Turbomaschinen weiter optimiert und Emissionen reduziert werden können. Zudem ist ein Verfahren zum Betrieb desselben anzugeben, welches unter Nutzung eines hybriden Antriebssystems die typischen Flugbetriebsphasen optimiert.

Erfindungsgemäß wird die Aufgabe durch ein mehrmotoriges Flugzeug mit den Merkmalen des Anspruches 1 und durch ein Verfahren zum Betrieb eines mehrmotorigen Flugzeugs nach Anspruch 15 gelöst.

Vorteilhafte Ausführungsformen der Erfindung ergeben sich aus den abhängigen Ansprüchen, der Beschreibung und der beigefügten Zeichnung.

Das Antriebssystem für mehrmotorige Flugzeuge basiert auf einer spezifischen Antriebssystemarchitektur unter dem Einsatz zweier verschiedener Energiequellen bzw. Kraftstoffe, die den emissionsfreien Betrieb eines Flugzeuges über wesentliche Phasen einer typischen Mission ermöglicht (Zero Emission Cruise). Aufgrund der spezifischen Systemarchitektur und der Kombination von zwei Energiequellen wird die Auswirkung der neuen Technologie und Energiequellen auf heutige, bereits im Einsatz befindliche Flugzeugkonfigurationen minimiert und ermöglicht eine wesentlich frühe Einsatzmöglichkeit gegenüber den aktuellen emissionsfreien Systemvorschlägen. Wesentlicher Aspekt der Erfindung ist die Auslegung eines solchen Systems auf Basis einer angestrebten Mission und der Gesamtarchitektur des Flugzeugs. Eine Dimensionierung und Darstellung der geforderten Effizienz ist nicht ohne Betrachtung des Gesamtsystems Flugzeug möglich.

Ein wesentlicher Bestandteil dieser Erfindung ist eine Flugzeugarchitektur die einen ,zero Emission' Reiseflug ermöglicht und damit auch die luftfahrtspezifischen Non-CO2 Emission in hohen Luftschichten eliminiert. Die Erfindung beschreibt in den Ansprüchen eine Lösung, wie der hohe Schubbedarf in der Startphase auf zwei Energiequellen aufgeteilt wird und damit die Dimensionierung des emissionsfreien Antriebssystems in Gewicht und Volumen mit bereits existierender Technologie in eine vorhandene Flugzeugplattform integriert werden kann. Die Erfindung offenbart weiterhin eine Lösung für ein Flugzeuggesamtsystem mit den wesentlichen Elementen eines Hybriden Antriebssystem, Brennstoffzellensystem, einem Wasserstofftanksystem und einer Steuer- und Regelungseinheit.

Das gegenständliche Gesamtsystem besteht aus einem Antriebssystem mit zwei verschiedenen Energiequellen. Das Antriebssystem besteht aus zwei elektrohybridisierten Brennkraft- oder Turbomaschinen oder sonstigen thermischen Verbrennungsmaschinen gekoppelt mit je einem Propulsor und einer speziellen Regelung- und Steuerungseinheit für thermische und elektrische Maschinen. Als Energiequellen dienen einerseits Kraftstoffe, kompatibel mit Standard Betankung, Standard Aviation Fuel oder de-karbonisierte, synthetische oder Bio-Kraftstoffe (SAF) sowie Wasserstoff für die Versorgung eines Brennstoffzellensystems. Grundsätzlich ist es der Verdienst der Erfindung lange Flugphasen emissionsfrei fliegen zu können. Dabei gilt es, die CO2- als auch die Nicht-CO2-Emissionen zu betrachten. Dabei werden insbesondere die klimaschädlichen Treibhauseffekte aufgrund der Verbrennung in großer Höhe berücksichtigt.

Um das Ziel mit diesem System eines emissionsfreien Reiseflugs und gleichzeitig eine frühe Möglichkeit der Anwendung zu erreichen, ist die Dimensionierung des Systems und die Nutzung der beiden Energiequellen über die Mission essentiell, soll die Kompatibilität mit heutigen Flugzeugkonzepten sichergestellt werden. Dabei gibt es zumindest zwei wesentliche Faktoren:
- Wasserstoffmenge und resultierende Tankvolumen sollte keine Auswirkung and die aerodynamischen Oberflächengrößen haben (kein zusätzlicher Widerstand und damit Leistungsverlust).
- Die Leistung des Brennstoffzellensystems ist primär an den Reiseflug angepasst, daher ist die limitierte Nutzung für Reiseflug und Sinkflug eine Optimierung der Nutzung ohne zusätzliche, schwere elektrische Leistungsenergiequellen kombinieren zu müssen, wie z.B. Batterie oder Supercaps (jede Erhöhung der Brennstoffzellensystemleistung wirkt sich exponentiell auf das Systemgewicht und den Kühlbedarf aus).

Zusammenfassend ermöglicht das Antriebssystem die Nutzung von neuen Technologien für die Luftfahrt aber auf Basis von heute bewertbarem Ausblick innerhalb der nächsten Dekade:
1. Anwendbarkeit in heutigen Flugzeugkonzepten (Flügel - Rumpf, mit signifikanten, aber heute bewertbaren Veränderungen). Wesentlich dafür z.B. auch die Weiternutzung des Flügels als Kraftstofftank für die Brennkraftmaschinen.
2. Grundsätzlich transferierbare und damit anwendbare Zulassungsregeln auf Flugzeugebene. Nachweisführung für neue Technologien und Energien, aber Konformität den Basisanforderungen.
3. Nutzung des Flugzeugs auch ohne Wasserstoff und Brennstoffzellensystem bei der gegebenen Systemauslegung, z.B. in Regionen ohne Wasserstoffinfrastruktur.
4. Limitierung der Systemauswirkung aufgrund Anpassungsmöglichkeit in der Nutzung der beiden Energiequellen.
5. Einsatz des Brennstoffzellensystems als kontinuierliche Energiequelle.
6. Erhöhte Betriebssicherheit für den sicherheitsrelevanten Ausfall einer thermischen Maschine oder Energiequelle.
7. Verbrennung von Kraftstoff der Brennkraftmaschinen im Wesentlichen nicht auf Reiseflughöhe, bzw. nur für kurze Zeitfenster, damit auch Vermeidung von klimaschädlichen Treibhauseffekten.

Bezüglich der Hauptziele, der Reduzierung von Emissionen, können mit dieser Systemarchitektur und spezifischen Energienutzung über die Mission an dem konkreten Beispiel des Turboprops Do328 folgende CO2 und Nicht-CO2 Emissionen reduziert werden. Als Referenz ist eine Auslegung des Systems zu Grunde gelegt, auf Basis einer Mission von einer Stunde und mit einer Energienutzung wie folgt:
a) Thermische Verbrennungsmaschine mit nachhaltigem, CO2 neutral produziertem Kraftstoff (SAF) primär für Start, Steigflug, Landeanflug und Landung.
b) Wasserstoff / Brennstoffzellensystem für Reiseflug und Sinkflug.

Der Energiebedarf für diese Referenzmission ergibt eine Aufteilung von ca. 60% für Synthetischen Kraftstoff (a) und 40% für Wasserstoff (b). Dabei ist vereinfacht zu Grunde gelegt, dass der Gesamtwirkungsgrad der thermischen Maschinen etwa gleich des Brennstoffzellensystems inklusive Kühlung und erforderlicher Elektrik ist. Diese Annahme kann natürlich je nach Integrationsfaktor und individuellem Stand der Technik variieren, dies liegt aber im Bereich von ca. 5% bis 10%. Dies beeinflusst die detaillierte Aufteilung von CO2-neutralem und emissionsfreiem Flug. Der technologische Ausblick sieht aus heutiger Sicht mehr Potential in einer Verbesserung des Wirkungsgrades von Brennstoffzellensystemen im Vergleich zu Verbesserungspotentialen eines Turbopropantriebes.

Zusammenfassung Emissionsreduzierung:
- Auf Basis eines Turboprop Flugzeuges mit ca. 40 bis 90 Passagieren, lassen sich etwa 40% der Energie während einer 1 Stunden Mission emissionsfrei über Wasserstoff und Brennstoffzelle darstellen. Dies bedeutet keinerlei CO2 Ausstoß während des Reiseflugs und keine klimaschädlichen Abgaseffekte und Kondensstreifenbildung in Reiseflughöhe (FL 250), die einen wesentlichen Anteil der Luftfahrtemission darstellen.
- Des Weiteren kann der Verbrennungsanteil von ca. 60% bei Wechsel von herkömmlichem Kraftstoff auf synthetische Kraftstoffe CO2 neutral produziert werden. Damit ermöglicht diese Flugzeug- und Systemarchitektur einen 100% de-karbonisierten und CO2 neutralen Flug und rd. 40% emissionsfreien Flug bezüglich CO2, Treibhausgas- und Kondensstreifeneffekte in Reiseflughöhe.

Diese Architektur kann in zwei unterschiedlichen Varianten umgesetzt werden:
a) Die Leistung der thermischen Maschinen ist ausgelegt, um Start, Steig- und Landeanflug durchführen zu können, die Nutzung des Brennstoffzellensystems ist ausschließlich für Reiseflug und Sinkflug. Das erforderliche Tankvolumen für Wasserstoff ist somit minimiert um damit die Möglichkeiten der Integration in das Flugzeug bestmöglich zu gestalten. Dabei behält das Flugzeug die grundsätzliche Fähigkeit, auch ohne Wasserstoff und Brennstoffzellensystem betrieben zu werden.
b) Unterstützung der Brennkraftmaschinen während des Starts, Steigflugs und des Landeanflug durch Erweiterung der Nutzung des Brennstoffzellensystems, um damit eine Reduzierung des Leistungsbedarfs der thermischen Maschinen zu erreichen (Down Sizing). Damit können kleinere Brennkraftmaschinen zum Einsatz kommen. Es ergibt sich somit eine weitere Erhöhung des emissionsfreien Fluganteil auf ca. 70% durch Reduzierung des Anteils der Mission-Blockenergie aus Kraftstoffverbrennung. Erforderlich ist eine Anpassung des Wasserstofftankvolumens an den erhöhten Energiebedarf.

Generell bezieht sich die Erfindung auf Antriebe für kleine und große Transportflugzeuge (CS-23 und CS-25) mit zweimotorigen Antrieben (Kolbenmaschinen oder Turbomaschinen), die thermische Energie in mechanische Antriebswellenleistung wandeln und einen Propulsor (Propeller, Schaufelrad, Rotor) zur Schuberzeugung antreiben. Am wirtschaftlichsten erscheint eine Umsetzung auf primär mit Propeller angetriebene Regionalflugzeuge in der einer Größenklasse von ca. 30 Passagieren bis zu 90 Passagieren. Dies entspricht einer Leistung an den Propellerwellen (Summe aller Propellerwellen - Gesamtleistung) von rd. 3.000 kW bis zu 8.000 kW.

Für die Machbarkeit dieser Architektur, insbesondere auch die Integrationsmöglichkeit in heutige Flugzeugarchitekturen, sind folgende Faktoren berücksichtigt:
- Energiebedarf in den verschiedenen Flugphasen
- Leistungsbedarf in den verschiedenen Flugphasen
- Optimierte Aufteilung zwischen thermischer Verbrennung / Kraftstoffnutzung und elektrischer Energie / Wasserstoffnutzung
- Wasserstoffgewicht und Tankvolumen
- Gesamtsystem und Komponentengewichte
- Thermischer und elektrischer Wirkungsgrad Brennstoffzellensystem

Für die Betrachtung der Realisierbarkeit dieser Erfindung auf bestimmte Flugzeugklassen, wird ein Technologieausblick bezüglich Leistung und Reife zu Grunde gelegt, der aus heutiger Sicht erreichbar ist.

Natürlich erweitert sich die Anwendbarkeit dieser Systemarchitektur auf höhere Leistungsklassen und Flugzeuggrößen bei Veränderungen im Technologieausblick und Einführungszeitpunkt.

Als Referenz werden folgende Technologiewerte angesetzt:
- Gesamtwirkungsgrad Brennstoffzellensystem: 50%
- Brennstoffzellensystem Gesamtgewicht: 1500 kg (inkl. Elektrischer Antrieb)

Bezüglich der Flüssigwasserstoff-Speichertanks sind Tanks mit einem gravimetrischen Index von 20 Prozent oder höher anzustreben. Der gravimetrische Index eines Tanks wird berechnet, indem die Masse des gespeicherten Wasserstoffs durch die Summe der Masse des gespeicherten Hydrogens und des leeren Tankgewicht. Ein gravimetrischer Index von 50 Prozent bedeutet, dass der leere Tank genauso schwer ist wie der gespeicherte Wasserstoff.

Im Wesentlichen lassen sich durch die Erfindung zumindest vier erhebliche Vorteile gegenüber den aus dem bekannten Stand der Technik bekannten Antriebssystemen erzielen:
a) Senkung des Kraftstoffverbrauchs durch optimierte, angepasste Nutzung der Brennkraftmaschinen an die verschiedenen Flugphasen. Dabei ist die Hybridisierung der Antriebseinheiten von wesentlicher Bedeutung, die eine variabel zuschaltbare elektrische Motor-Generatoreinheit auf einem gemeinsamen Getriebe beinhaltet. Durch einen sukzessiven Übergang der Antriebsleistung durch die elektrische Maschine kann diese die Leistung der thermischen Maschine im Übergang von Steigflug auf Reiseflug übernehmen.
b) Eine weitere Rolle spielt im erfindungsgemäßen Antriebssystem das Getriebe, dessen Eingangswellen einen jeweils optimierten Drehzahlbereich sowohl der thermischen Maschine als auch der elektrischen Maschine ermöglichen, um somit das Drehmoment optimal an die Propulsorwelle abzugeben. Dies ermöglicht eine gewichtsoptimierte Bauweise und verlustoptimierte Betriebszustände beider, der elektrischen und thermischen Maschinen.
c) Ein weiterer wichtiger Aspekt der Erfindung ist die Reduzierung der Betriebszeiten der thermischen Maschinen über die Flugstunden zur Senkung der Wartungskosten und Verlängerung der Wartungsintervalle. Generell erfordern elektrische Maschinen bei gleicher Nennleistung einen geringeren Wartungsaufwand und -kosten, da die elektrische Motor-Generatoreinheit typischer Weise über keine ,heißen' Komponenten verfügt.
d) Schließlich gestattet das Antriebssystem eine Erhöhung der Sicherheit im "Single Engine Failure" Fall. Insbesondere in den dabei kritischen Flugphasen, Start, erste Steigflugphase und Landeanflug (Take-Off, Initial/Climb und Approach) kann die fehlende Leistung sofort über die elektrischen Maschinen wieder symmetrisch auf beide Seiten verteilt werden.

Im Vergleich zu in der Entwicklung befindlichen, kapazitätsstarken, batteriebasierten Hybridkonzepten ergibt sich eine wesentliche gewichtsoptimierte Bauweise, da gegenwärtige Batteriekonzepte nach wie vor nur eine geringe spezifische Energiedichte vorzuweisen haben.

Die erforderliche Redundanz wird durch die beiden Antriebseinheiten inkl. elektrischer Motor-Generatoreinheiten erzeugt. Beide Antriebseinheiten haben die gleiche Leistung und partitionieren mit gleicher Schubleistung über das gesamte Missionsprofil. Der hauptsächlich dimensionierende Fehlerfall - komplett Ausfall eines Antriebes ist in der Auslegung jeder Antriebseinheit mitberücksichtigt und erlaubt in jeder Flugphase ein manövrieren des Flugzeuges mit vorgegeben Limitationen bis zur sicheren Landung.

Schubanpassungen über die Flugmission werden in gleichem Maße von beiden Antrieben und optional mit zusätzlicher, aktiver Blattverstellung vorgenommen. Die Optimierung von Turbomaschinen erfolgt üblicherweise für die dominierende Flugphase, primär während der Reiseflugphase, da diese auch den größten Anteil und Energieverbrauch über die Mission darstellt. Eine gleichwertige, hohe Betriebseffizienz ist nicht über alle Flugphasen möglich. Während für Mittel- und Langstrecken die maximale Effizienz für den deutlich dominierenden Reiseflug ausgelegt und erreicht werden kann, sind die Betriebszustände für Kurz- und Ultrakurzstrecken wesentlich weniger dominant und unterschiedlicher. Dies hat zur Folge, dass Triebwerke für Regional- und Kurzstreckenflugzeuge über die Gesamtmission deutlich weniger bei optimaler Effizienz betrieben werden und relativ zu Kurz- und Langstrecken schlechteren spezifischen Kraftstoffverbrauch pro Passagier haben.

Dabei spielt u.a. auch der unterschiedliche Abfall der propulsiven und thermischen Effizienz eine Rolle, da z.B. ein Propellerflugzeug in niedrigeren Flughöhen fliegt und geringere, höhenabhängige Schubverluste im Reiseflug erfährt als vergleichsweise ein Langstreckenflugzeug mit Turbofantriebwerk. Dies führt dazu, dass Langstreckentriebwerke wesentlich konstanter bei hoher Leistung laufen und guter Effizienz betrieben werden, im Steigflug als auch im Reiseflug, während Regionalflugzeuge sehr deutlich breitere Leistungsbereiche, z.B. bei Start, Steigflug und Reiseflug haben.

Daher ergeben sich im speziellen für Regionalflugzeuge mit Propeller, aber auch für andere zweimotorige Flugzeuge mit Schaufelrad oder Rotor, sehr unterschiedliche Schubanforderungen über die Mission, die durch eine Hybridisierung der thermischen Maschinen mit einer elektrischen Maschine effizienter ausgelegt und betrieben werden kann.

Während bisherige hybride Antriebssysteme und Architekturen für Flugzeuge das Ziel hatten zusätzliche oder eine andere Anordnung propulsiver Elemente (Propeller, Rotoren, Schaufelräder) oder zusätzliche, alternative Energiequellen wie Batterien oder Brennstoffzellen zu integrieren, erreicht diese Erfindung eine höhere Effizienz ohne zusätzliche Propulsor oder Energiequellen. Im Gegensatz bisheriger hybrider Konzepte, wie z.B. die Anordnung mehrerer Propulsor verteilt über die Spannweite des Flügel, um bei niedrigen Geschwindigkeiten einen besseren Auftrieb zu erzeugen, was ein deutliches Mehrgewicht für einen Vorteil während der kurzen Flugphasen bei Start und Landung ist, oder die Nutzung von Energiesystemen, deren Leistungsdichte heute nicht für größere Flugzeuge ausreichend ist, kann das Antriebssystem mit heutiger Technologie und Flugzeugkonzepten mit signifikanten Vorteilen umgesetzt werden.

Die Betriebsstunden der einzelnen thermischen Maschinen, unter Annahme eines gleichmäßigen, wechselnden Betriebes während Reiseflug und Sinkflug, lässt sich um ca. 30% reduzieren (als Referenz eine 60 min Mission), was sich eins zu eins in einer Verlängerung der Wartungsintervalle und Reduzierung der Wartungskosten der thermischen Maschinen wiederspiegelt.

Die in dieser Erfindung beschriebene Antriebsarchitektur kann ebenso als Retrofit-Variante für bestehende Flugzeuge dimensioniert und integriert werden.

Weitere Merkmale, Vorteile und Wirkungen der Erfindung ergeben sich aus der nachfolgenden Beschreibung bevorzugter Ausführungsbeispiele der Erfindung, wie sie in der Zeichnung wiedergegeben sind. Es zeigen:
- Fig. 1a: einen Draufsicht eines zweimotorigen Flugzeuges mit schematische Darstellung eines hybriden Antriebssystems,
- Fig. 1b: eine Seitenansicht des zweimotorigen Flugzeuges nach Fig. 1a mit schematische Darstellung eines hybriden Antriebssystems,
- Fig. 2: eine Systemskizze eines hybriden Antriebssystems mit schematische Darstellung der Systemarchitektur,
- Fig. 3a: ein Diagramm zu Leistungsbedarf und Flughöhe während der Betriebsphasen einer typischen 200NM-Mission eines Flugzeuges mit konventionellen Gasturbinen und elektrischen Motor-Getriebeeinheiten,
- Fig. 3b: ein Diagramm zum akkumulierten Energiebedarf während der Betriebsphasen einer typischen 200NM-Mission eines Flugzeuges mit konventionellen Gasturbinen und elektrischen Motor-Getriebeeinheiten,
- Fig. 4a: ein Diagramm zu Leistungsbedarf und Flughöhe während der Betriebsphasen einer typischen 200NM-Mission eines Flugzeuges mit verkleinerten Gasturbinen und elektrischen Motor-Getriebeeinheiten,
- Fig. 4b: ein Diagramm zum akkumulierten Energiebedarf während der Betriebsphasen einer typischen 200NM-Mission eines Flugzeuges mit verkleinerten Gasturbinen und elektrischen Motor-Getriebeeinheiten
- Fig. 5: eine Systemskizze eines hybriden Antriebssystems mit schematische Darstellung der Systemarchitektur im primären Betriebsmodus und
- Fig. 6: eine Systemskizze eines hybriden Antriebssystems mit schematische Darstellung der Systemarchitektur im dritten Betriebsmodus.

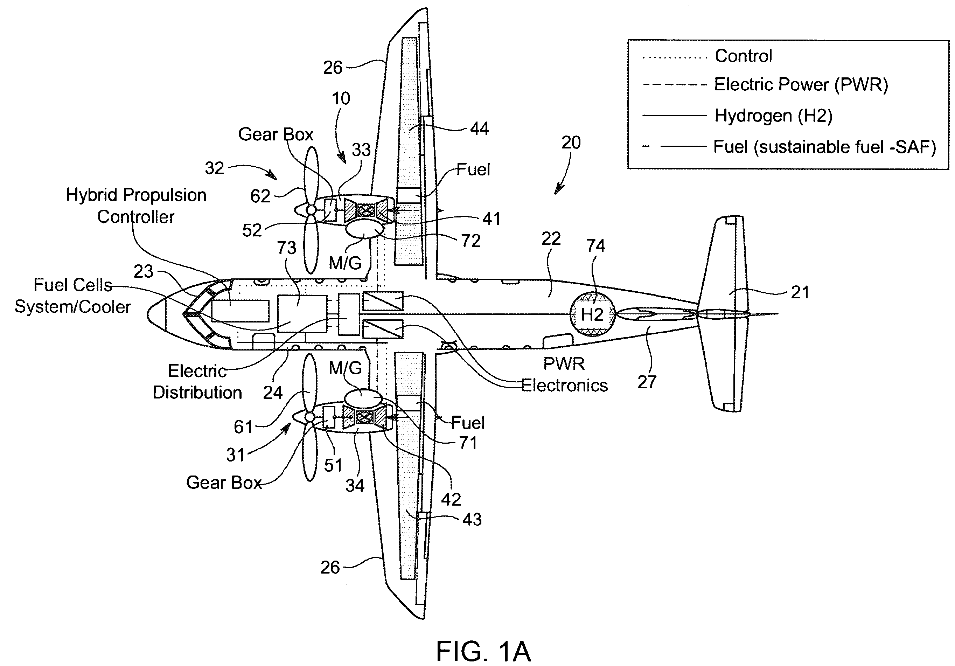

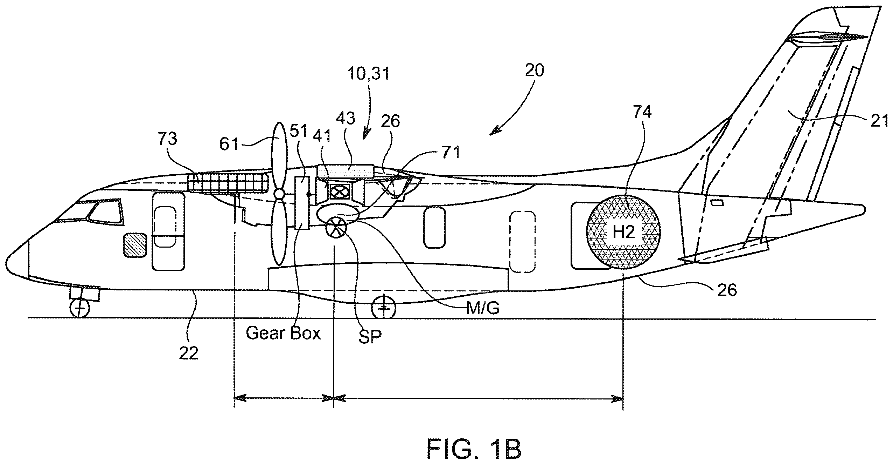

Eine typische Einbaukonfiguration eines hybriden Antriebssystems 10 für ein zweimotoriges Regionalflugzeug 20 ist am Beispiel der Dornier 328-100 in **Fig. 1a** und **Fig. 1b** zu sehen. Das Flugzeug 20 ist als konventioneller Schulterdecker mit heckseitigem T-Leitwerk 21 ausgeführt. Der abschnittsweise zylindrisch ausgeführte Rumpf 22 ist mit einer Druckkabine ausgeführt, in welcher das Cockpit 23 und der Fluggastraum 24 untergebracht sind. Heckseitig schließt die Druckkabine mit einer Druckkalotte druckdicht ab. Weiter heckseitig verjüngt sich der Rumpf 22 konisch und trägt das T-Leitwerk 21. Bei der aus dem Stand der Technik bekannten Dornier 328-100 ist im konischen Übergangsbereich einer der Gepäckräume vorgesehen.

In konventioneller Schulterdeckerkonfiguration sind die Tragflügel 26 an der Rumpfröhre des Rumpfes, diese oberhalb tangierend angebracht. In den Triebwerksgondeln 33 und 34, wovon je eine am linken und rechten Tragflügel 26 angebracht ist, sind die hybrid-elektrischen Antriebseinheiten 31 und 32 untergebracht. Über die ebenfalls in den Triebwerksgondeln 33 und 34 integrierten Reduziergetriebe werden die mehrblättrigen und verstellbaren Propeller 61, 62 angetrieben. Zur Vermeidung von unerwünschten Vereisungserscheinungen an den Propellerblättern sind diese elektrisch beheizbar, den Strom zur Beheizung erhalten die Propellerblätter von einer Übertragungseinrichtung 80.

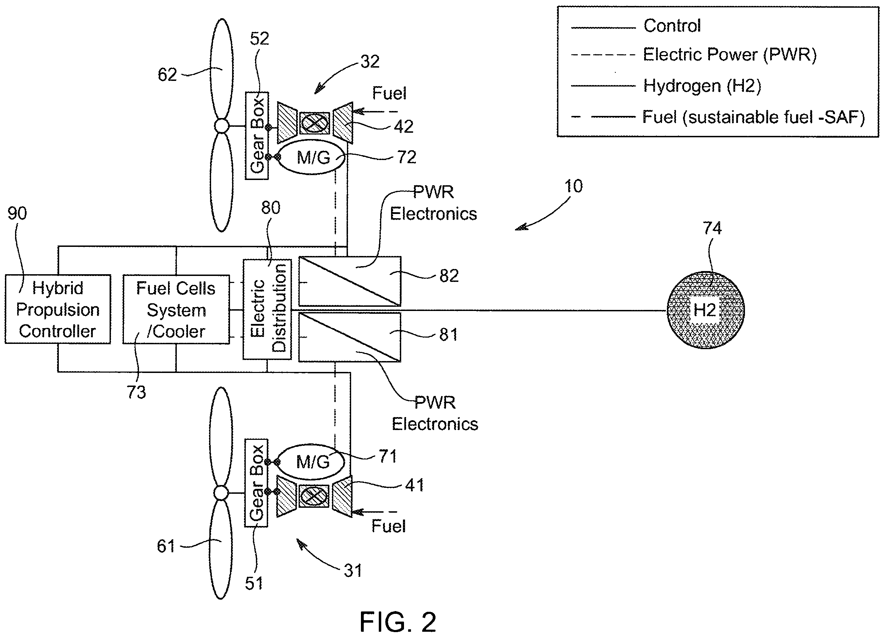

Die in **Fig. 1a** in einem zweimotorigen Flugzeug 20 integrierte Systemarchitektur des Antriebssystems 10 ist in weiteren Details in **Fig. 2** zu sehen ist. Das Antriebssystem 10 umfasst zwei unabhängig voneinander betreibbare hybrid-elektrische Antriebseinheiten 31 und 32. Jede hybrid-elektrische Antriebseinheit 31, 32 weist eine Gasturbine 41, 42 mit angeflanschtem Reduziergetriebe 51, 52 auf, über welches jeweils ein Propeller 61, 62 mit variabler Blattverstellung gekoppelt ist. Entsprechende Gasturbinen 41, 42 mit integriertem Reduziergetriebe 51, 52 sind beispielsweise unter der Bezeichnung PW 119C von Pratt & Whitney Canada erhältlich sind. In den Tragflächen 26 sind linke und rechte Flügelintegraltanks 43, 44 ausgebildet, die über nicht weiter dargestellte Kraftstoffleitungen und -systeme die beiden Gasturbinen 41, 42 mit Kraftstoff versorgen.

Jeder Antriebseinheit 31, 32 ist eine Motor-Generatoreinheit 71, 72 zugeordnet; welche jeweils antriebsseitig mit dem Reduziergetriebe 51, 52 gekoppelt ist. Die Motor-Generatoreinheit 71, 72 lässt sich je nach Betriebsphase als Elektromotor oder als Generator betreiben. Im Antriebsmodus überträgt die Motor-Generatoreinheit 71, 72 Antriebsleistung über das Reduziergetriebe 51, 52 auf den jeweilig zugeordneten Propeller 61, 62. Im Generatormodus generiert die Motor-Generatoreinheit 71, 72 elektrische Leistung, die einer Übertragungseinrichtung 80 zur weiteren Verteilung bzw. Speicherung zugeführt wird. Funktionaler Bestandteil der Übertragungseinrichtung 80 sind zwei Leistungswandler 81 und 82, wovon jeweils einer je einer Motor-Generatoreinheit 71, 72 zugeordnet ist.

Zur Versorgung der Motor-Generatoreinheiten 71, 72 mit elektrischer Energie weist das Antriebssystem 10 eine Brennstoffzelle 73 auf, die wiederum über einen Brennstofftank 74 mit Wasserstoff versorgt wird. In der Brennstoffzelle 73 wird Wasserstoff in Elektrizität umgewandelt, die dann über die Übertragungseinrichtung 80 Leistungswandler 81 und 82 die Motor-Generatoreinheit 71, 72 mit elektrischer Leistung versorgen, um die Propeller 61, 62 anzutreiben. Am weitesten fortgeschritten und für die Luftfahrt am besten geeignet sind heute Niedertemperatur-Protonenaustauschmembran-Brennstoffzellen (PEM-Brennstoffzellen). Die Ergänzung dieses Systems durch einen optionalen Energiespeicher wie eine Batterie trägt dazu bei, eine schnelle Lastverfolgung und die Abdeckung von Leistungsspitzen zu gewährleisten, um die Dimensionierung des Brennstoffzellensystems zu optimieren.

Generell kann Wasserstoff als unter Druck stehendes Gas oder in flüssiger Form gespeichert werden. Während die gasförmige Speicherung für kürzere Flüge geeignet sein kann und kommerziell verfügbar ist, konzentriert sich die Erfindung auf Flüssigwasserstoff-Speichertanks (LH2 ), da sie etwa halb so viel Volumen benötigen und folglich wesentlich leichter sind als Tanks für gasförmigen Wasserstoff. Da LH2 kalt bleiben muss und die Wärmeübertragung minimiert werden muss, um ein Verdampfen des Wasserstoffs zu vermeiden, sind kugelförmige oder zylindrische Tanks erforderlich, um die Verluste gering zu halten. In der in **Fig. 1a** und **Fig. 1b** dargestellten Konfiguration ist der kugelförmige Brennstofftank 74 im konisch verlaufenden Rumpfheck 27 untergebracht, welcher bei Entfernung des Brennstofftanks 74 als Frachtraum nutzbar ist.

Die Aggregate bestehend aus Controller 90, Übertragungseinrichtung 80 und Brennstoffzelle 73 in einem bugseitigen Bereich des Rumpfes 22 vor dem Tragflügel und ausserhalb der Druckkabine angeordnet. Die Aggregate und der Brennstofftank 74 zur Versorgung der Brennstoffzelle 73 bilden einen bezüglich des Schwerpunktes SP des Flugzeugs 20 im Wesentlichen neutrales Momentengleichgewicht (siehe **Fig. 1b**).

In einer sekundären Funktion dient die mittels einer Kühleinheit von der Brennstoffzelle 73 abgeführte Abwärme zur Enteisung exponierter Oberflächen des Flugzeuges 20, wie z.B. den Flügelvorderkanten, Lufteinlässe der Gasturbinen 41, 42 und Vorderkanten des T-Leitwerks.

Zur Steuerung der thermisch und elektrisch generierten Antriebsleistung ist ein zentraler Controller 90 vorgesehen, welcher mit Leistungswandler 81 und 82 und den Gasturbinen 41, 42 verbunden ist. Einerseits steuert der Controller 90 je nach Betriebsphase über die Leistungswandler 81 und 82 die Motor-Generatoreinheit 71, 72 die Abgabe elektrischer Antriebsleistung sowie die zu generierenden elektrische Energie und andererseits die thermisch generierte Antriebsleistung der Gasturbinen 41, 42. Typische zu steuernde und zu überwachende Parameter des Controllers 90 sind die Kraftstoffzufuhr, die Drehzahlen der Leistungs- und Hochdruckwelle und Turbinentemperatur der Gasturbinen 41, 42.

In einer weiteren Ausführungsform ist in **Fig. 2** eine Architektur gezeigt, die auf einem Gleichspannungsnetzwerk 101 und Wechsel-Gleichspannungsumrichter 81, 82 beruht. Je nach Betriebsmodus und Leistungsanforderung kann die Leistungsabgabe der Brennstoffzelle 73 über die Übertragungseinrichtung 80 und die Wechsel-Gleichspannungsumrichter 81, 82 der ersten und zweiten Motor-Generatoreinheit 71 bzw. 72 zugeführt und die Antriebsleistung über die Reduziergetriebe 51 bzw. 52 auf die Propeller 61 bzw. 62 übertragen werden.

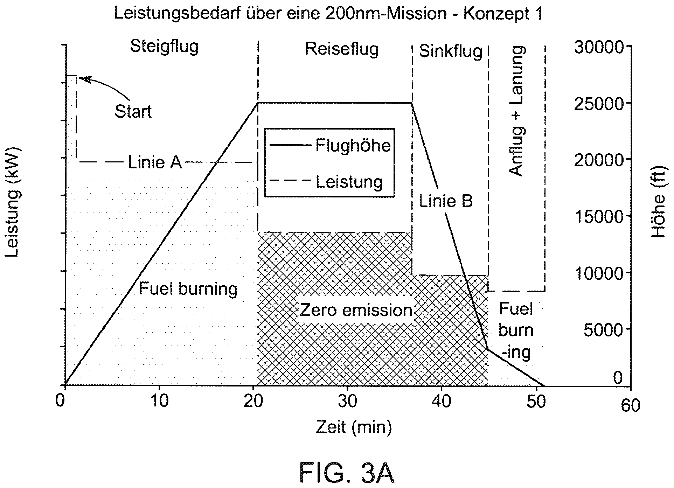

Das Diagramm der **Fig. 3a** zeigt für den Reiseflug am Beispiel einer Dornier 328 den Unterschied eines Flugzeuges 20 mit einem erfindungsgemäßen Antriebssystems 10 zum Stand der Technik am Beispiel einer mit zwei konventionellen Triebwerken ausgestatteten Dornier 328. Die maximale Leistung der thermischen Maschinen ist ausgelegt, um Start und Landanflug durchzuführen, die Nutzung des Brennstoffzellensystems ist ausschließlich für Reiseflug und Sinkflug vorgesehen. Das erforderliche Tankvolumen für Wasserstoff ist somit minimiert um damit die Möglichkeiten der Integration in das Flugzeug bestmöglich zu gestalten. Das Diagramm **Fig. 3a** stellt den Leistungsbedarf in kW und Flughöhe in ft über die Zeit einer typischen 200 NM Flugmission dar. Nachfolgend werden die wichtigsten Phasen der typischen Flugmission erläutert:

### Start:

Der Start ist die Flugphase, in der das Flugzeug 20 einen Übergang von der Bewegung am Boden (Rollen) zum Fliegen in der Luft durchläuft, wobei es normalerweise auf einer Startbahn startet. In der Regel werden die Triebwerke während des Starts mit voller Leistung betrieben.

### Steigen:

Nach dem Start steigt das Flugzeug auf eine bestimmte Höhe (vorliegend auf 25.000 ft), bevor es in dieser Höhe sicher und wirtschaftlich zum Ziel fliegt.

### Reiseflug:

Der Reiseflug ist der Anteil der Flugreisen, bei dem das Fliegen am treibstoffeffizientesten ist. Sie findet zwischen Aufstiegs- und Abstiegsphasen statt und stellt in der Regel den größten Teil einer Reise dar. Technisch gesehen wird der Reiseflug bei konstanter Fluggeschwindigkeit und -höhe durchgeführt. Der Reiseflug endet, wenn sich das Flugzeug dem Zielort nähert, an dem die Sinkflugphase zur Vorbereitung der Landung beginnt. Bei den meisten kommerziellen Passagierflugzeugen verbraucht die Reiseflugphase den größten Teil des Treibstoffs.

### Sinkflug:

Der Sinkflug während einer Flugreise ist der Abschnitt, in dem ein Flugzeug an Höhe verliert. Der Sinkflug ist ein wesentlicher Bestandteil des Landeanflugs. Andere Teilabstiege können dazu dienen, dem Verkehr auszuweichen, schlechte Flugbedingungen (Turbulenzen oder schlechtes Wetter), Wolken (insbesondere unter Sichtflugregeln) zu vermeiden, in wärmere Luft einzutreten (bei Vereisungsgefahr) oder die Windrichtung einer anderen Höhe auszunutzen. Normale Sinkflüge finden bei konstanter Fluggeschwindigkeit und konstantem Sinkflugwinkel statt. Der Pilot steuert den Sinkflugwinkel durch Variation der Motorleistung und des Anstellwinkels (Absenken der Nase), um die Fluggeschwindigkeit im vorgegebenen Bereich zu halten. Zu Beginn und während der Sinkflugphase werden die Triebwerke mit niedriger Leistung betrieben werden.

### Anflug & Landung:

Der Anflug und die Landung sind der letzte Teil eines Fluges, bei dem das Flugzeug zum Boden zurückkehrt. Zur Landung werden die Fluggeschwindigkeit und die Sinkgeschwindigkeit so weit reduziert, um einen vorgegebenen Gleitpfad (3 Grad Endanflug auf die meisten Flughäfen) zum Aufsetzpunkt auf der Piste einzuhalten. Die Geschwindigkeitsreduzierung wird durch die Verringerung des Schubs und/oder die Erzeugung eines größeren Luftwiderstands mittels Klappen, Fahrwerk oder Bremsklappen erreicht. Wenn sich das Flugzeug dem Boden nähert, führt der Pilot ein Abfangen (flare) aus, um eine sanfte Landung einzuleiten. Lande- und Anflugvorgänge werden zumeist unter Nutzung eines Instrumentenlandesystem (ILS) durchgeführt.

Linie A (gestrichelt): Leistungsbedarf des Antriebsystems 10 über die Mission mit zwei hybrid-elektrische Antriebseinheiten 31, 32. Der Leistungsbedarf ist während des Starts am höchsten und reduziert sich über die nachfolgenden Flugphasen. Der Leistungsbedarf wird für die Flugphasen Start, Steigflug sowie Anflug und Landung durch die Gasturbinen 41, 42 alleine bedient (,primärer Betriebsmodus'). Während des Reise- und Sinkfluges erfolgt der Antrieb über die von der Brennstoffzelle 73 versorgte Motor-Generatoreinheiten 71, 72 (,dritter Betriebsmodus'). Während des Fluges steuert der Controller 90 den Betrieb der Antriebseinheiten 31, 32 und die Übergänge vom primären auf den sekundären Betriebsmodus und umgekehrt. Die gepunktete Fläche unter der Linie A repräsentiert den Verbrauch an Kraftstoff durch die Gasturbinen 41, 42 und die karierte Fläche den Verbrauch an Wasserstoff durch die Motor-Generatoreinheiten 71, 72 während der Betriebsphasen. Der Energiebedarf für diese Referenzmission ergibt eine Aufteilung von ca. 60 % für Brennstoff (SAF) und 40 % für Wasserstoff.

Linie B (durchgezogen) beschreibt die Flughöhe in ft über die Zeit der Mission. Die Flughöhe ist während des Reisefluges am höchsten und beträgt etwa 25.000 ft.

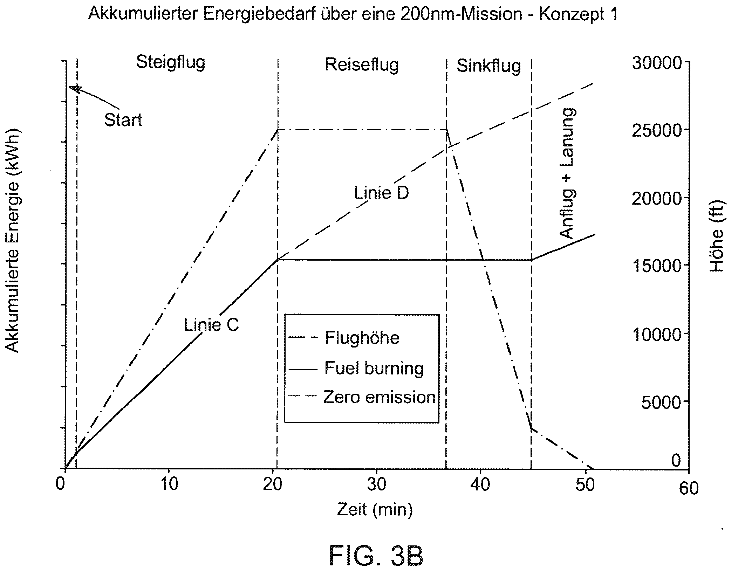

Im Diagramm nach **Fig. 3b** ist der dazugehörige akkumulierte Energiebedarf durch die durchgezogene und gestrichelte Linien C und D während der vorgenannten Betriebsphasen und Betriebsmodi aufgezeigt. Linie C repräsentiert hierbei den Energiebedarf während des primären und Linie D während des dritten Betriebsmodus.

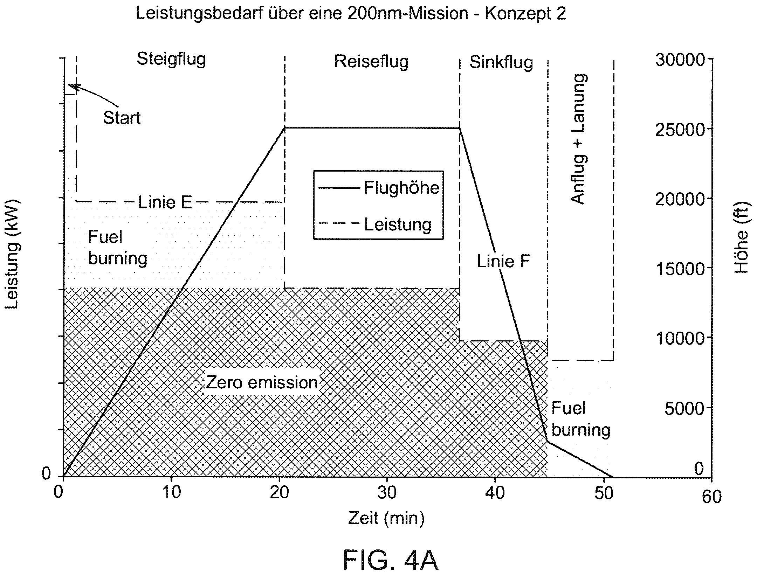

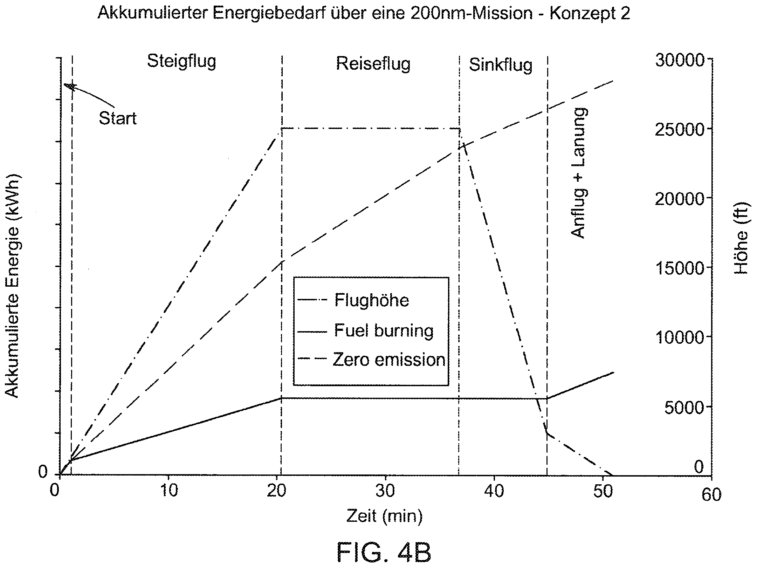

Die Diagramme der **Fig. 4a** und **Fig. 4b** repräsentieren die Werte für eine zweite Variante der Erfindung. Hierbei erfolgt eine Unterstützung der Brennkraftmaschinen während des Starts und des Landeanflug durch Erweiterung der Nutzung des Brennstoffzellensystems, um damit eine Reduzierung des Leistungsbedarfs der thermischen Maschinen zu erreichen (Down Sizing). Hierbei erfolgt ein kombinierter Betrieb und Leistungsabgabe von Gasturbinen 41 und 42 sowie Motor-Generatoreinheiten 71, 72, koordiniert durch Controller 90 (,sekundärer Betriebsmodus'). Ein Vorteil liegt darin, dass kleinere Brennkraftmaschinen zum Einsatz kommen können. Es ergibt sich somit eine weitere Erhöhung des emissionsfreien Fluganteils auf ca. 70% (karierte Fläche in **Fig. 4a****).**

Linie E (gestrichelt): Der Leistungsbedarf des Antriebsystems 10 über die Mission mit zwei hybrid-elektrische Antriebseinheiten 31, 32 nach **Fig. 4a** ist prinzipiell der gleiche wie in Fig. 3a dargestellt. Auch hier ist der Leistungsbedarf während des Starts am höchsten und reduziert sich über die nachfolgenden Flugphasen.

Linie F (durchgezogen) beschreibt die Flughöhe in ft über die Zeit der Mission. Die Flughöhe ist während des Reisefluges am höchsten und beträgt wie auch bei **Fig. 3a** etwa 25.000 ft.

Die Diagramme der **Fig. 3a** und **Fig. 3b** machen einen wesentlichen Aspekt der Erfindung deutlich, dass nämlich für viele Flugzeuge, insbesondere für Regionalflugzeuge mit Propellerantrieb, der geforderte Schub für den Start gegenüber dem Reiseflug deutlich höher ist und damit die thermischen Maschinen über einen hohen Anteil der Flugmission nur bei rund der Hälfte ihrer Leistungsfähigkeit betrieben werden. D.h. der Betrieb konventioneller Turboprop-Antriebe erfolgt außerhalb des optimalen Betriebspunktes, der dem Punkt der maximalen Leistungsabgabe näher liegt. Demgegenüber lässt sich ein hybridelektrisches Antriebssystem auf die beiden verschiedenen Betriebsmodi optimieren.

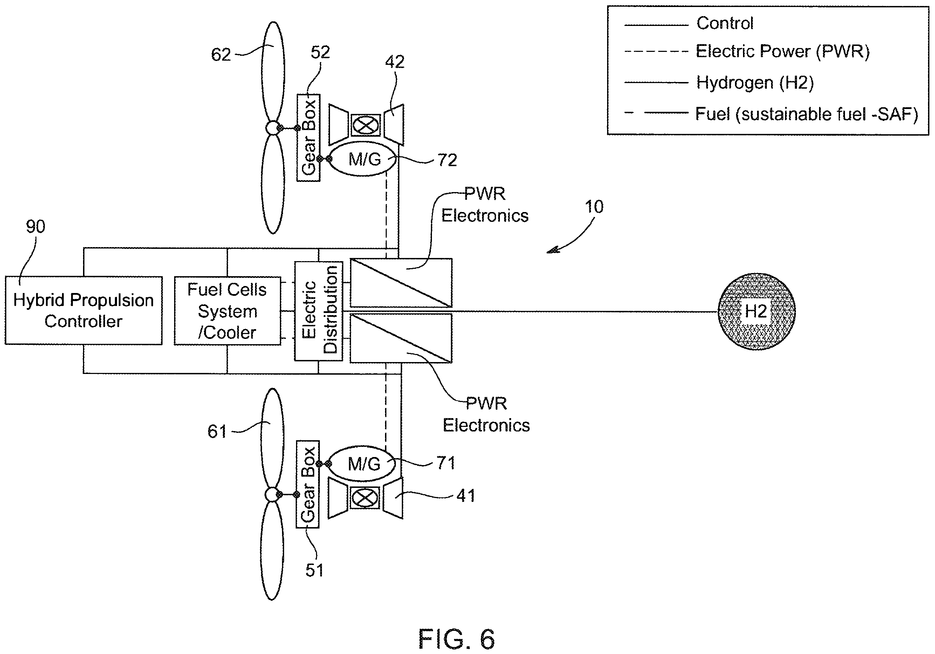

Hinsichtlich der Betriebsphasen des Antriebssystems 10 ergeben sich folgende grundsätzliche Basisbetriebszustände:

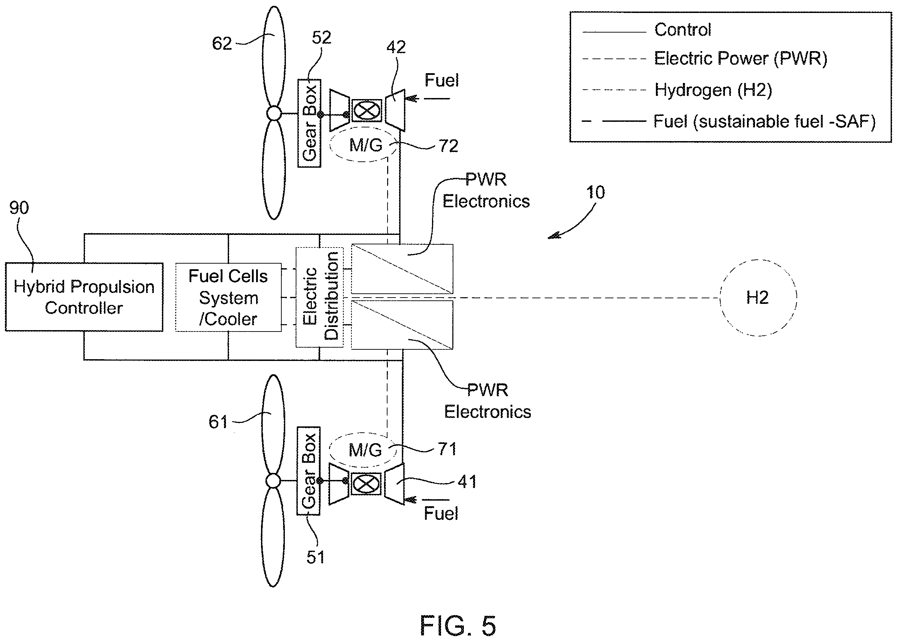

1. Die **Fig. 5** zeigt eine Systemskizze für Start, Steigflug und Landeanflug (Take-Off, Climb and Approach / Landing). Beide Gasturbinen 41 und 42 sind in Betrieb und treiben die Propeller 61, 62 über die zwischengeschalteten Reduziergetriebe 51, 52 an (durchgezogene Linien). Die Schubleistungsregelung erfolgt zentral über den Hybrid-Propulsion Controller 90 an die Gasturbinen 41 und 42 **(,primäre Betriebsmodus').** Die elektrischen Motor-Generatoreinheiten 71 und 72 erbringen keine Antriebsleistung (gestrichelte Linien).
2. Der **sekundäre Betriebsmodus** für Start und Steigflug ist in **Fig. 2** dargestellt. Bei diesem kombinierten Betriebsmodus erhalten die Propulsoren (61, 62) Antriebsleistung sowohl von der ersten und zweiten Brennkraftmaschine (41, 42) sowie von der ersten und zweiten Motor-Generatoreinheit (71, 72). Der dazugehörige Leistungsbedarf und kummulierte Energieverbrauch ist in den Diagrammen der **Fig. 4a** und **Fig. 4b** zu sehen. Deutlich wird hierbei der reduzierte Brennstoffverbrauch für die Gasturbinen aufgrund der hinzukommenden Antriebsleistung durch die elektrischen Motor-Generatoreinheiten 71, 72.
3. Der Systemzustand für Reiseflug und Sinkflug (Cruise and Decent) ist in **Fig. 6** zu sehen. Der Leistungs- / Drehmomentbedarf sinkt auf Reiseflugniveau **(****Fig. 3a** **und** **4a****),** dabei wird die Leistung der beiden Gasturbinen 41, 42 heruntergefahren, während die Antriebsleistung von den beiden Motor-Generatoreinheiten 71, 72 über die aufgekuppelten Getriebe 51, 52 auf beide Propeller 61 und 62 gleich verteilt übertragen werden kann. Im Reiseflug und anschließenden Sinkflug wird der Schubbedarf über den hybriden Propulsion Controller 90 angepasst. Dieser ist für die thermische und elektrische Regelung zuständig **(,dritte Betriebsmodus').**
4. Die erfindungsgemäße Systemarchitektur ermöglicht auch im kritischen Fehlerfall, dem Ausfall einer Brennkraftmaschine einen symmetrischen Schub aufgrund der Leistungsverteilung über das elektrische Netzwerk. Auf Seiten der ausgefallenen Brennkraftmaschine 41, 42 lässt sich die Motor-Generatoreinheit 71 bzw. 72 hinzuschalten und so zumindest ein Teil des ausgefallenen Schubes kompensieren.

### Bezugszeichenliste

- 10: Antriebssystem
- 20: Flugzeug
- 21: T-Leitwerk
- 22: Rumpf
- 23: Cockpit
- 24: Fluggastraum
- 26: Tragflügel, links und rechts
- 27: Rumpfheck
- 31, 32: Antriebseinheiten, links und rechts
- 33, 34: Triebwerksgondel, links und rechts
- 41, 42: Gasturbine, links und rechts
- 43, 44: Flügelintegraltank, links und rechts
- 51, 52: Reduziergetriebe, links und rechts
- 61, 62: Propeller, links und rechts
- 71, 72: Motor-Generatoreinheiten, links und rechts
- 73: Brennstoffzelle
- 74: Brennstofftank
- 80: Übertragungseinrichtung
- 81, 82: Leistungswandler
- 90: Controller

- A, B, C, D, E, F: Linien
- SP: Schwerpunkt

## Patentansprüche

1. Mehrmotoriges Flugzeug mit einem hybriden Antriebssystem (10) mit
• zumindest einem ersten und einer zweiten hybrid-elektrischen Antriebseinheit (31, 32), die jeweils eine Brennkraftmaschine (41, 42), eine Motor-Generatoreinheit (71, 72) zur Übertragung von Antriebsleistung auf einen Propulsor (61, 62) aufweist,
• wobei der Propulsor (61, 62) mit der Brennkraftmaschine (41, 42) und / oder der Motor-Generatoreinheit (71, 72) zur Übertragung von Antriebsleistung kuppelbar ist,
• die erste und zweite Motor-Generatoreinheit (71, 72) zur Verteilung von elektrischer Leistung mit einer Übertragungseinrichtung (80) verbunden sind,
• einer Brennstoffzelle (73) zur Versorgung der ersten und/oder zweiten Motor-Generatoreinheit (71, 72) mit elektrischer Energie
• einem Controller (90) der zur Steuerung der thermisch und elektrisch generierten Antriebsleistung mit den Brennkraftmaschinen (41, 42), und / oder der Übertragungseinrichtung (80) und /oder Motor-Generatoreinheiten (71, 72) und / oder der Brennstoffzelle (73) verbunden ist,
• separaten Brennstofftanks (43, 44) zur Versorgung der Brennkraftmaschinen (41, 42) mit Kraftstoff bzw. der Brennstoffzelle (73) mit kryogenem Wasserstoff,
• einem die Antriebseinheiten (31, 32) sowie einen Brennstofftank (43, 44) aufnehmenden Tragflügel (26) , einem Rumpf (22),
• wobei die Antriebseinheit (31, 32) von einem Turboprop-Triebwerk mit jeweils einer Gasturbine (41, 42) , die zum Antrieb eines Propellers (61, 62) mit einem drehzahlverminderndes Getriebe (51, 52) koppelbar ist, gebildet wird und
• die Motor-Generatoreinheit (71, 72) je nach Betriebsmodus über den Controller (90) gesteuert mit dem Getriebe (51, 52) koppelbar ist
**dadurch gekennzeichnet, dass** zumindest das überwiegende Volumen der Brennstofftanks (43, 44) zur Versorgung der Brennkraftmaschinen (41, 42) im Tragflügel (26) und zumindest das überwiegende Volumen der Brennstofftanks (74) zur Versorgung der Brennstoffzelle (73) in einem heckseitigen Bereich des Rumpfes (22) integriert ist.

2. Mehrmotoriges Flugzeug nach Anspruch 1, **dadurch gekennzeichnet, dass** die hybrid-elektrischen Antriebseinheit (31, 32)
• in einem primären Betriebsmodus die Propulsoren (61, 62) die Antriebsleistung überwiegend oder vollkommen von den Brennkraftmaschinen (41, 42) erhalten,
• in einem sekundären, kombinierten Betriebsmodus die Propulsoren (61, 62) die Antriebsleistung von der ersten und zweiten Brennkraftmaschine (41, 42) sowie von der ersten und zweiten Motor-Generatoreinheit (71, 72) erhalten und
• in einem dritten Betriebsmodus die Propulsoren (61, 62) die Antriebsleistung von der ersten und zweiten Motor-Generatoreinheit (71, 72) erhalten.

3. Mehrmotoriges Flugzeug nach einem der vorhergehenden Ansprüche, **dadurch gekennzeichnet, dass** der Controller (90) in den Betriebsmodi eine symmetrische Verteilung der Antriebsleistung auf die Propulsoren (61, 62) bewirkt.

4. Mehrmotoriges Flugzeug nach einem der vorhergehenden Ansprüche, **dadurch gekennzeichnet, dass** die elektrische Antriebsleistung der ersten bzw. zweiten Motor-Generatoreinheit (71, 72) beim Übergang zwischen den Betriebsmodi variabel zuschaltbar ist.

5. Mehrmotoriges Flugzeug nach einem der vorhergehenden Ansprüche, **dadurch gekennzeichnet, dass** die hybrid-elektrischen Antriebseinheiten (31, 32) zur Übertragung der Antriebsleistung jeweils ein Getriebe (51, 52) aufweisen, wobei die Brennkraftmaschine (41, 42) und die Motor-Generatoreinheit (71, 72) mittels des Getriebes (51, 52) mit dem Propulsor (61, 62) kuppelbar ist.

6. Mehrmotoriges Flugzeug nach einem der vorhergehenden Ansprüche, **dadurch gekennzeichnet, dass** der Wechsel der Übertragung der Antriebsleistung der Brennkraftmaschine (41, 42) und der Antriebsleistung der Motor-Generatoreinheit (71, 72) derart sukzessive erfolgt, dass die an den Propulsor (61, 62) der gemeinsamen Antriebseinheit (31, 32) abgegebene Antriebsleistung etwa gleich bleibt.

7. Mehrmotoriges Flugzeug nach einem der vorhergehenden Ansprüche, **dadurch gekennzeichnet, dass** die Propulsoren (61, 62) als Propeller mit Blattverstellung ausgeführt sind und der Controller (90) zur Steuerung der Antriebsleistung mit der Blattverstellung verbunden ist.

8. Mehrmotoriges Flugzeug nach einem der vorhergehenden Ansprüche, **dadurch gekennzeichnet, dass** in einem weiteren Betriebsmodus die Antriebsleistung der ersten oder zweiten Brennkraftmaschine (41, 42) vollkommen oder überwiegend ausgefallen ist und die erste bzw. zweite Motor-Generatoreinheit (71, 72) über die Übertragungseinrichtung (80) von der Brennstoffzelle (73) mit elektrischer Leistung beaufschlagt wird.

9. Mehrmotoriges Flugzeug nach einem der vorhergehenden Ansprüche, **dadurch gekennzeichnet, dass** die Übertragungseinrichtung (80) als Wechselstromnetzwerk ausgeführt ist.

10. Mehrmotoriges Flugzeug nach einem der Ansprüche 1 bis 9, **dadurch gekennzeichnet, dass** die Übertragungseinrichtung (80) als Gleichstromnetzwerk ausgeführt ist, wobei jeder Motor-Generatoreinheit (71, 72) ein Wechsel-Gleichspannungsumrichter (81, 82) zugeordnet ist, welche zur Steuerung der Drehzahl des Propulsors (61, 62) mit dem Controller (90) verbunden ist.

11. Mehrmotoriges Flugzeug nach einem der vorhergehenden Ansprüche, **dadurch gekennzeichnet, dass** die Brennkraftmaschinen (41, 42) mit nachhaltigen Flugkraftstoff (SAF) betrieben werden.

12. Mehrmotoriges Flugzeug nach einem der vorhergehenden Ansprüche, **dadurch gekennzeichnet, dass** der Rumpf (22) in einem heckseitigen Bereich ein Raum für die Ausbildung eines Frachtraumes vorgesehen ist, in welchem der Brennstofftank (74) zur Versorgung der Brennstoffzelle (73) angeordnet ist.

13. Mehrmotoriges Flugzeug nach einem der vorhergehenden Ansprüche, **dadurch gekennzeichnet, dass** Aggregate bestehend aus Controller (90) und/oder Übertragungseinrichtung (80) und/oder Brennstoffzelle (73) in einem bugseitigen Bereich des Rumpfes (22) angeordnet sind.

14. Mehrmotoriges Flugzeug nach Anspruch 13, **dadurch gekennzeichnet, dass** die Aggregate und der Brennstofftank (74) zur Versorgung der Brennstoffzelle (73) einen bezüglich des Schwerpunktes (SP) des Flugzeugs (20) im Wesentlichen neutrales Momentengleichgewicht bilden und/oder
die Brennstoffzelle (73) eine Kühleinheit aufweist, wobei die Abwärme zur Enteisung exponierter Oberflächen des Flugzeuges dient.

15. Verfahren zum Betrieb eines mehrmotorigen Flugzeugs (20) gemäß Anspruch 2 oder gemäß einem der vorherigen von Anspruch 2 abhängigen Anspüche, **dadurch gekennzeichnet, dass** das Antriebssystem (10) in einem primären, sekundären und in einem dritten Betriebsmodus betrieben wird, wobei
• das Rollen des Flugzeugs (20) insbesondere auf Vorfeldern und Taxiways im primären oder dritten Betriebsmodus,
• der Start und der Steigflug auf Reiseflughöhe im primären oder sekundären Betriebsmodus,
• der Reise- und Sinkflug bis auf Anflughöhe im sekundären oder dritten Betriebsmodus,
• der Anflug und die Landung im primären oder sekundären Betriebsmodus und
• bei Ausfall einer Brennkraftmaschine (41, 42) der Weiterflug im sekundären oder dritten Betriebsmodus erfolgt.

## Claims

1. Multi-engine aircraft having a hybrid propulsion system (10), comprising
• at least a first and a second hybrid-electric propulsion unit (31, 32), each comprising an internal combustion engine (41, 42), a motor-generator unit (71, 72) for transmitting propulsive power to a propulsor (61, 62),
• wherein the propulsor (61, 62) is connectable to the internal combustion engine (41, 42) and/or the motor-generator unit (71, 72) for the transmission of drive power,
• the first and second motor-generator units (71, 72) are connected to a transmission device (80) for distributing electrical power,
• a fuel cell (73) for supplying the first and/or second motor-generator unit (71, 72) with electrical energy,
• a controller (90) which is connected to the internal combustion engines (41, 42) and/or the transmission device (80) and/or motor-generator units (71, 72) and/or the fuel cell (73) to control the thermally and electrically generated drive power,
• separate fuel tanks (43, 44) for supplying the internal combustion engines (41, 42) with fuel and the fuel cell (73) with cryogenic hydrogen,
• an airfoil (26) accommodating the drive units (31, 32) and a fuel tank (43, 44), a fuselage (22),
• wherein the drive unit (31, 32) is formed by a turboprop engine having one respective gas turbine (41, 42) that can be coupled to a speed-reducing gearbox (51, 52) to drive a propeller (61, 62), and
• the motor-generator unit (71, 72) can be coupled to the gearbox (51, 52) under the control of the controller (90) depending on the operating mode,
**characterized in that** at least the predominant volume of the fuel tanks (43, 44) for supplying the internal combustion engines (41, 42) is integrated in the airfoil (26) and at least the predominant volume of the fuel tanks (74) for supplying the fuel cell (73) is integrated in a tail region of the fuselage (22).

2. Multi-engine aircraft according to claim 1, **characterized in that** the hybrid-electric propulsion unit (31, 32)
• in a primary operating mode, the propulsors (61, 62) receive the propulsion power predominantly or entirely from the combustion engines (41, 42),
• in a secondary combined operating mode, the propulsors (61, 62) receive the drive power from the first and second internal combustion engines (41, 42) and from the first and second motor-generator units (71, 72), and
• in a third operating mode, the propulsors (61, 62) receive the drive power from the first and second motor-generator units (71, 72).

3. Multi-engine aircraft according to one of the preceding claims, **characterized in that** the controller (90) effects a symmetrical distribution of the drive power to the propulsors (61, 62) in the operating modes.

4. Multi-engine aircraft according to one of the preceding claims, **characterized in that** the electrical drive power of the first and second motor-generator unit (71, 72) can be variably connected during the transition between the operating modes.

5. Multi-engine aircraft according to one of the preceding claims, characterized the hybrid-electric propulsion units (31, 32) each have a gearbox (51, 52) for transmitting the drive power, wherein the internal combustion engine (41, 42) and the motor-generator unit (71, 72) can be coupled to the propulsor (61, 62) by means of the gearbox (51, 52).

6. Multi-engine aircraft according to one of the preceding claims, **characterized in that** the change in the transmission of the drive power of the internal combustion engine (41, 42) and of the drive power of the motor-generator unit (71, 72) is carried out successively in such a way that the power delivered to the propulsors (61, 62) of the common propulsion unit (31, 32) remains approximately the same.

7. Multi-engine aircraft according to one of the preceding claims, **characterized in that** the propulsors (61, 62) are designed as propellers with pitch-adjustable blades and the controller (90) for controlling the drive power is connected to the pitch-adjustment mechanism.

8. Multi-engine aircraft according to one of the preceding claims, **characterized in that**, in a further operating mode, the drive power of the first or second internal combustion engine (41, 42) has failed completely or predominantly and electrical power is applied to the first or second motor-generator unit (71, 72) via the transmission device (80) from the fuel cell (73).

9. Multi-engine aircraft according to one of the preceding claims, **characterized in that** the transmission device (80) is designed as an alternating current network.

10. Multi-engine aircraft according to one of the claims 1 to 9, **characterized in that** the transmission device (80) is designed as a DC network, wherein an AC/DC converter (81, 82) is associated with each motor-generator unit (71, 72) which is connected to the controller (90) to control the speed of the propulsor (61, 62).

11. Multi-engine aircraft according to one of the preceding claims, **characterized in that** the internal combustion engines (41, 42) are operated with sustainable aviation fuel (SAF).

12. Multi-engine aircraft according to one of the preceding claims, **characterized in that** the fuselage (22) is provided in a tail region with a space for the formation of a cargo compartment, in which the fuel tank (74) for supplying the fuel cell (73) is arranged.

13. Multi-engine aircraft according to one of the preceding claims, **characterized in that** units consisting of controller (90) and/or transmission device (80) and/or fuel cell (73) are arranged in a nose region of the fuselage (22).

14. Multi-engine aircraft according to claim 13, **characterized in** the units and the fuel tank (74) for supplying the fuel cell (73) form a substantially neutral moment equilibrium with respect to the center of gravity (SP) of the aircraft (20) and/or the fuel cell (73) has a cooling unit, wherein the waste heat serves to de-ice exposed surfaces of the aircraft.

15. Method for operating a multi-engine aircraft (20) according to claim 2 or according to one of the preceding claims dependent on claim 2, **characterized in that** the propulsion system (10) is operated in a primary, secondary and third operating mode, wherein
• the taxiing of the aircraft (20), in particular on aprons and taxiways, takes place in the primary or third operating mode,
• take-off and climbing to cruising altitude takes place in the primary or secondary operating mode,
• cruising and descending to approach altitude takes place in the secondary or third operating mode,
• approach and landing takes place in the primary or secondary operating mode, and
• in the event of failure of one combustion engine (41, 42), the flight is continued in secondary or third operating mode.

## Revendications

1. Aéronef multimoteur possédant un système de propulsion hybride (10) avec
• au moins une première unité de propulsion hybride électrique et une deuxième (31, 32), qui comportent chacune un moteur à combustion interne (41, 42), une unité de moteur et de générateur (71, 72) pour transmettre la puissance de propulsion à un propulseur (61, 62),
• le propulseur (61, 62) pouvant être couplé avec le moteur à combustion interne (41, 42) et/ou avec l'unité de moteur et de générateur (71, 72) en vue de la transmission d'une puissance de propulsion,
• les première et deuxième unités de moteur et de générateur (71, 72) étant reliées à une installation de transmission (80) en vue de la distribution de puissance électrique,
• une pile à combustible (73) pour l'alimentation de la première et/ou de la deuxième unité de moteur et de générateur (71, 72) en énergie électrique,
• un contrôleur (90) qui est connecté aux moteurs à combustion interne (41, 42) et/ou à l'unité de transmission (80) et/ou aux unités de moteur et de générateur (71, 72) et/ou à la pile à combustible (73) pour commander la puissance de propulsion générée de façon thermique ou électrique,
• des réservoirs de combustible (43, 44) séparés pour l'alimentation des moteurs à combustion interne (41, 42) en carburant ou de la pile à combustible (73) en hydrogène cryogénique,
• une aile portante (26) qui reçoit les unités de propulsion (31, 32) et un réservoir de combustible (43, 44), un fuselage (22),
• l'unité de propulsion (31, 32) étant formée par un groupe turbopropulseur avec une turbine à gaz (41, 42) respective, qui peut être couplée à un engrenage (51, 52) pour l'entraînement d'une hélice (61, 62), et
• l'unité de moteur et de générateur (71, 72) pouvant être couplée avec l'engrenage (51, 52) sous le contrôle du contrôleur (90) en fonction du mode de fonctionnement,
**caractérisé en ce que** la majeure partie, au moins, du volume des réservoirs de combustible (43, 44) pour l'alimentation des moteurs à combustion interne (41, 42) est intégrée dans l'aile portante (26) et la majorité, au moins, du volume des réservoirs de combustible (74) pour l'alimentation de la pile à combustible (73) est intégrée dans une région arrière du fuselage (22).

2. Aéronef multimoteur selon la revendication 1, **caractérisé en ce que** l'unité de propulsion hybride électrique (31, 32)
• reçoit principalement ou entièrement la puissance de propulsion des moteurs à combustion interne (41, 42) dans un mode de fonctionnement primaire des propulseurs (61, 62),
• dans un mode de fonctionnement mixte secondaire, les propulseurs (61, 62) reçoivent la puissance de propulsion des premier et deuxième moteurs à combustion interne (41, 42) et des première et deuxième unités de moteur et de générateur (71, 72) et
• dans un troisième mode de fonctionnement, les propulseurs (61, 62) reçoivent la puissance de propulsion des première et deuxième unité de moteur et de générateur (71, 72).

3. Aéronef multimoteur selon l'une des revendications précédentes, **caractérisé en ce que** le contrôleur (90) réalise une distribution symétrique de la puissance de propulsion aux propulseurs (61, 62) dans les modes de fonctionnement.

4. Aéronef multimoteur selon l'une des revendications précédentes, **caractérisé en ce que** la puissance de propulsion électrique des première et deuxième unités de moteur et de générateur (71, 72) peut être appliquée de façon variable pendant la transition entre les modes de fonctionnement.

5. Aéronef multimoteur selon l'une des revendications précédentes, **caractérisé en ce que** les unités de propulsion hybrides électriques (31, 32) comportent chacune un engrenage (51, 52) destiné à transmettre la puissance de propulsion, le moteur à combustion interne (41, 42) et l'unité de moteur et de générateur (71, 72) pouvant être couplés au propulseur (61, 62) au moyen de l'engrenage (51, 52).

6. Aéronef multimoteur selon l'une des revendications précédentes, **caractérisé en ce que** le changement de transmission de la puissance de propulsion des moteurs à combustion interne (41, 42) et de la puissance de propulsion des unités de moteur et de générateur (71, 72) est effectué graduellement, de telle façon que la puissance de propulsion fournie au propulseur (61, 62) de l'unité de propulsion (31, 32) commune reste à peu près constante.

7. Aéronef multimoteur selon l'une des revendications précédentes, **caractérisé en ce que** les propulseurs (61, 62) sont réalisés comme des hélices à pas variable et le contrôleur (90) est connecté au réglage du pas pour commander la puissance de propulsion.

8. Aéronef multimoteur selon l'une des revendications précédentes, **caractérisé en ce que**, dans un autre mode de fonctionnement, la puissance de propulsion du premier ou deuxième moteur à combustion interne (41, 42) est complètement ou en majeure partie abolie et la première ou la deuxième unité de moteur et de générateur (71, 72) est alimentée en puissance électrique via l'unité de transmission (80) à partir de la pile à combustible (73).

9. Aéronef multimoteur selon l'une des revendications précédentes, **caractérisé en ce que** l'unité de transmission (80) est réalisée comme un réseau de courant alternatif.

10. Aéronef multimoteur selon l'une des revendications 1 à 9, **caractérisé en ce que** l'unité de transmission (80) est réalisée comme un réseau de courant continu, chaque unité de moteur et de générateur (71, 72) étant associée à un convertisseur alternatif-continu (81, 82) qui est connecté au contrôleur (90) pour commander la vitesse de rotation du propulseur (61, 62).

11. Aéronef multimoteur selon l'une des revendications précédentes, **caractérisé en ce que** les moteurs à combustion interne (41, 42) fonctionnent avec du carburant d'aviation durable (SAF).

12. Aéronef multimoteur selon l'une des revendications précédentes, **caractérisé en ce qu'**est prévu dans la partie arrière du fuselage (22) un espace pour la formation d'une soute de chargement dans laquelle est disposé le réservoir de combustible (74) destiné à alimenter la pile à combustible (73).

13. Aéronef multimoteur selon l'une des revendications précédentes, **caractérisé en ce que** des groupes comprenant un contrôleur (90) et/ou une unité de transmission (80) et/ou une pile à combustible (73) sont disposés dans une partie avant du fuselage (22).

14. Aéronef multimoteur selon la revendication 13, **caractérisé en ce que** les groupes et le réservoir de combustible (74) destiné à alimenter la pile à combustible (73) forment un équilibre de moments sensiblement neutre par rapport au centre de gravité (SP) de l'aéronef (20) et/ou
la pile à combustible (73) comporte une unité de refroidissement dont la chaleur dissipée sert à dégivrer des surfaces exposées de l'aéronef.

15. Procédé pour le fonctionnement d'un aéronef multimoteur (20) selon la revendication 2 ou selon une des revendications précédentes dépendant de la revendication 2, **caractérisé en ce que** le système de propulsion (10) est conduit dans des modes de fonctionnement primaire, secondaire, et un autre mode de fonctionnement, dans lesquels
• le roulage de l'aéronef (20), en particulier sur les parkings et les taxiways, s'effectuent dans le mode de fonctionnement primaire ou le troisième,
• le décollage et l'ascension jusqu'à l'altitude de croisière dans le mode de fonctionnement primaire ou secondaire,
• le vol de croisière et la descente jusqu'à l'altitude d'approche dans le mode de fonctionnement secondaire ou le troisième,
• l'approche et l'atterrissage dans le mode de fonctionnement primaire ou secondaire et
• en cas de panne d'un moteur à combustion interne (41, 42), le vol se poursuit dans le mode de fonctionnement secondaire ou le troisième.
